# EUROPÄISCHE PATENTANMELDUNG

(11) **EP 3 147 598 A1**
(43) Veröffentlichungstag der Anmeldung: **29.03.2017**
(21) Anmeldenummer: 15187043.3
(22) Anmeldetag: 28.09.2015
(51) Int. Cl.: F25D 3/08, A01N 1/02, A61J 3/00

(54) **THERMOSCHUTZSPEICHERZELLE EINER KÜHLTRANSPORTBOX**

(71) Anmelder: Swissmedpack Technologien JP. Buettiker GmbH, 4108 Witterswil (CH)
(72) Erfinder: BÜTTIKER, Jean-Pierre, 4108 Witterswil (CH)
(74) Vertreter: Latscha Schöllhorn Partner AG

(57) **Zusammenfassung**

Eine Thermoschutzspeicherzelle (1) für die Wahrung eines Temperaturbereichs von einer unteren Temperatur bis zu einer oberen Temperatur umfasst einen Zellenkörper (2) und mindestens eine Füllkammer (3), die im Zellenkörper (2) angeordnet ist. Die mindestens eine Füllkammer (3) ist mit einem ersten Phasenwechselmaterial (4) befüllt, welches bei etwa der unteren Temperatur seine Phase wechselt. Die mindestens eine Füllkammer (3) ist weiter mit einem zweiten Phasenwechselmaterial (5) befüllt, welches bei etwa der oberen Temperatur seine Phase wechselt. Die Thermoschutzspeicherzelle (1) ermöglicht auf sinnvolle Weise eine effiziente und sichere Wahrung eines temperaturempfindlichen Guts im Temperaturbereich insbesondere während dessen Transport.

## Beschreibung

### Technisches Gebiet

Die Erfindung betrifft eine Thermoschutzspeicherzelle gemäss dem Oberbegriff des unabhängigen Anspruchs 1 sowie eine Transportbox mit einer solchen Thermoschutzspeicherzelle und Anwendungen einer solchen Transportbox.

Thermoschutzspeicherzellen mit einem Zellenkörper und mindestens einer Füllkammer, die im Zellenkörper angeordnet ist, können zur Wahrung eines Temperaturbereichs von einer unteren Temperatur bis zu einer oberen Temperatur eingesetzt werden.

### Stand der Technik

Für die Bewahrung von Gütern in einem für das jeweilige Gut bevorzugten beziehungsweise benötigten Temperaturbereich werden heutzutage verschiedene Einrichtungen eingesetzt. Unter anderem ist es bekannt, zum Transport von Gütern in einem bestimmten Temperaturbereich Kühlboxen beziehungsweise Kühltransportboxen einzusetzen. Beispielsweise ist es beim Transport von pharmazeutischen Arzneimitteln und insbesondere von biopharmazeutischen Arzneimitteln beziehungsweise Biopharmaka häufig äusserst wichtig, dass eine Wahrung eines bestimmten Temperaturbereichs während des ganzen Transports gewährleistet werden kann. Kann dieser Temperaturbereich während des Transports nicht gehaltenwerden, so dürfen die Arzneimittel üblicherweise nicht eingesetzt werden.

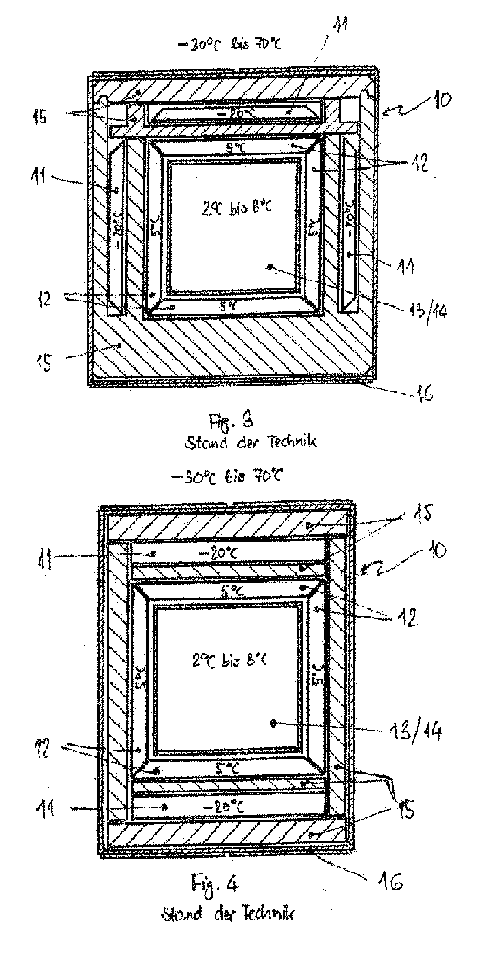

Beispiele von bekannten Kühltransportboxen (10) sind in Fig. 3, Fig. 4 und Fig. 5 gezeigt. Die Kühltransportboxen (10) sind jeweils im Wesentlichen ähnlich aufgebaut. Sie umfassen herkömmlicherweise jeweils einen Satz an Wärme- (11) und Kältespeicherzellen (12) als einfache Ausführungen von Thermoschutzspeicherzellen, welche ein in einem Innenraum (14) angeordnetes Gut (13), wie beispielsweise ein biopharmazeutisches oder klassisches Arzneimittel oder ein Lebensmittel, umhüllen. Der umhüllte Innenraum (14) soll die Haltbarkeitstemperatur des Guts von beispielsweise 2°C bis 8°C sicherstellen. Weitere Schichten der Kühltransportbox (10) sind eine ausserhalb der Kälte- und Wärmespeicherzellen (11, 12) angeordnete Isolation (15) und eine äussere Wellpappen-Box (16). Falls die eine Boxgesamtmasse 30 kg übersteigt, wird typischerweise eine Holzpalette zur Stabilisierung und Vereinfachung des Handlings verwendet.

Bei den bekannten Kälte- und Wärmespeicherzellen (11, 12) sind im Stand der Technik zwei Lösungsansätze bekannt, nämlich die in Fig. 3 und in Fig. 4 gezeigte Lösung der getrennten Wärme- und Kältespenderzelle (12) sowie die in Fig. 5 gezeigte Lösung der Kombi-Wärme-Kälte-Zelle (11, 12).

Beim ersten Lösungsansatz wird die Wärmespeicherzelle entweder mit Paraffin oder mit Wasser befüllt, wobei die Zelle in einem Kühlraum bei 5°C vorkonditioniert wird. Die mit Wasser befüllte Kältespeicherzelle wird bei -20°C beziehungsweise -10°C in einem Tiefkühlraum vorkonditioniert, d.h. gefroren.

Beim zweiten Lösungsansatz wird die Kombi-Wärme-Kälte-Zelle mit Paraffin befüllt, wobei die Zelle in hochpräzisen Kühlräumen bei 3.5°C auf ±0.5°C genau vorkonditioniert werden muss.

Beim ersten Lösungsansatz haben die getrennten Wärme- und Kältezellen eine hohe Temperaturdifferenz, welche zu einer Kannibalisierung der Thermogesamtleistung führen kann. Bleibt beispielsweise eine Kühltransportbox des ersten Lösungsansatzes mit den -20°C Kältespeicherzellen an einer Flughafenabfertigung oder Zoll mehrere Tage in einem Kühlraum liegen, so gefriert das Arzneimittel und darf deshalb dem Patienten nicht mehr verabreicht werden.

Nachteilig wirkt sich beim zweiten Lösungsansatz mit der Kombi-Wärme-Kälte-Zelle die Aufteilung der thermischen Leistungen auf Kühlung und Heizung aus. Im Weiteren kann die Lösung durch die aufwendige präzise Vorkonditionierung sowie durch die Paraffinzusammensetzungsschwankung nachteilig sein.

Beide oben beschriebenen Lösungsansätze aus dem Stand der Technik besitzen typischerweise den ökologischen und ökonomischen Minuspunkt, dass die verschiedenen eingesetzten Kühltransportboxen sowie die Thermospeicherelemente nicht für eine Wiederverwendung gebaut sind, und somit oftmals nach einmaligem Gebrauch als Abfall entsorgt werden.

Der vorliegenden Erfindung liegt daher die Aufgabe zu Grunde, eine effiziente und sichere Aufbewahrung eines temperaturempfindlichen Guts in einem bestimmten Temperaturbereich insbesondere während dessen Transport auf eine einfache und sinnvolle Weise zu ermöglichen.

### Darstellung der Erfindung

Die Aufgabe wird erfindungsgemäss durch eine Thermoschutzspeicherzelle gelöst, wie sie durch die Merkmale des unabhängigen Anspruchs 1 definiert ist, sowie durch eine Kühlbox, wie sie durch die Merkmale des unabhängigen Anspruchs 10 definiert ist. Vorteilhafte Ausführungsvarianten der Erfindung ergeben sich aus den abhängigen Ansprüchen.

Das Wesen der Erfindung besteht im Folgenden: Eine Thermoschutzspeicherzelle für die Wahrung eines Temperaturbereichs von einer unteren Temperatur bis zu einer oberen Temperatur umfasst einen Zellenkörper und mindestens eine Füllkammer, die im Zellenkörper angeordnet ist. Die mindestens eine Füllkammer ist mit einem ersten Phasenwechselmaterial befüllt, welches bei etwa der unteren Temperatur seine Phase wechselt. Die mindestens eine Füllkammer ist weiter mit einem zweiten Phasenwechselmaterial befüllt, welches bei etwa der oberen Temperatur seine Phase wechselt.

Der Begriff "Phase" im Zusammenhang mit den Phasenwechselmaterialien kann für einen Aggregatszustand des zugehörigen Phasenwechselmaterials stehen. Insbesondere können die Begriffe "Phase" und "Aggregatszustand" in diesem Zusammenhang synonym verwendet werden.

Der Begriff "Wahrung" kann sich im Zusammenhang mit der Erfindung auf ein Halten unter bestimmten Bedingungen über einen bestimmten Zeitraum beziehen. Insbesondere umfassen diese Bedingungen die Temperatur, auf der ein temperaturempfindliches Gut gehalten werden soll. Beispielsweise kann sich das Wahren darauf beziehen, dass das Gut über einen Zeitraum, der zum Beispiel für einen Transport notwendig ist, im Temperaturbereich gehalten werden kann.

Unter dem Begriff "temperaturempfindliches Gut" kann ein Gegenstand beziehungsweise ein Produkt beziehungsweise ein Stoff verstanden werden, das in seiner Beschaffenheit oder Qualität beeinträchtigt wird, wenn es sich ausserhalb des Temperaturbereichs befindet. Insbesondere kann sich die Qualität des temperaturempfindlichen Guts verschlechtern, wenn es über einen bestimmten Zeitraum hinweg nicht im Temperaturbereich gehalten wird. Beispielsweise kann das temperaturempfindliche Gut ein pharmazeutischen Arzneimittel und insbesondere ein biopharmazeutisches Arzneimittel sein.

Die Thermoschutzspeicherzelle kann beispielsweise aus einem festen Kunststoff wie einem Polyethylen oder einem ähnlichen hergestellt sein.

Die mindestens eine Füllkammer kann nimmt die Phasenwechselmaterialien sicher aufnehmen. Sie weist jedoch vorzugsweise einen Verschluss auf, welcher die Originalität der Phasenwechselmaterialien sicherstellen kann. Eine Manipulation der Phasenwechselmaterialien kann damit verhindert werden.

Mit der vorliegenden Erfindung kann eine kombinierte Wärme-Kälte-Thermoschutzspeicherzelle bereitgestellt werden, die in einer Kühltransportbox beziehungsweise Transport- beziehungsweise Kühlbox angewendet werden kann. Insbesondere kann diese mittels der erfindungsgemässen mindestens einen Füllkammer mit einer gleichzeitigen Wärme- und Kälteschutzfunktion ausgestattet sein.

Die obere Temperatur ist typischerweise von der unteren Temperatur verschieden. Insbesondere ist die obere Temperatur höher beziehungsweise grösser als die untere Temperatur. Dadurch kann der Umfang des Temperaturbereichs durch eine Subtraktion der unteren Temperatur von der oberen Temperatur ermittelt werden. Typische Phasenwechselmaterialien können wässerige Salzlösungen, Wasser, Salzhydrate und Paraffine, welche aus Alkanen zusammengesetzt sind, sein.

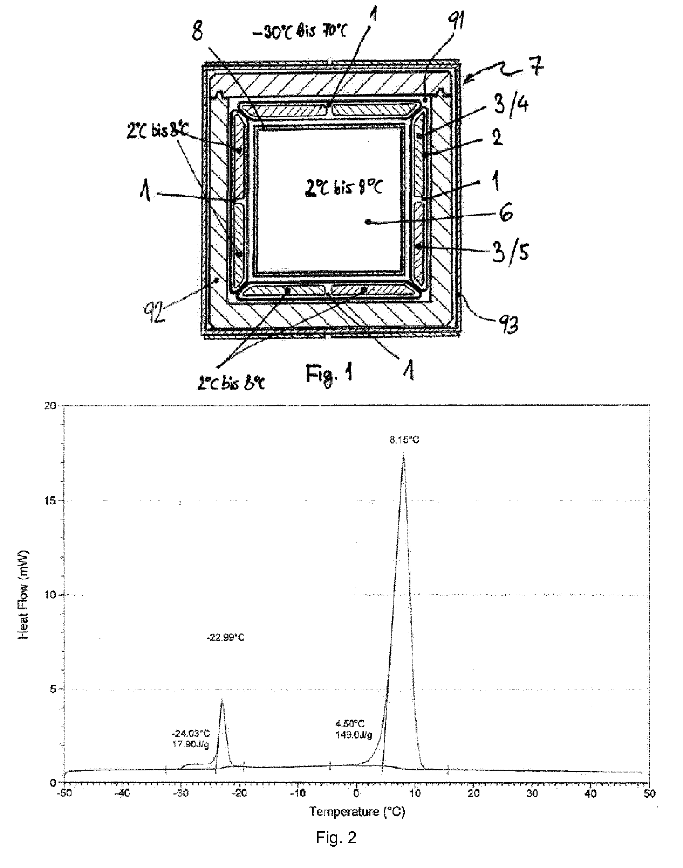

Die vorliegende Erfindung nutzt die verhältnismässig hohe latente Schmelzwärme, Lösungswärme oder Absorptionswärme unter Ausnützung der Enthalpie der Phasenwechselmaterialzustandsänderung zu Schutzzwecken des Gutes. Die Ausnutzung der Enthalpie mit dem Phasenübergang beispielsweise zwischen fest und flüssig, ist ein reversibler thermodynamischer Prozess, mit einer hohen Zyklenstabilität. Dabei kann die Enthalpie wie in Fig. 2 ersichtlich mittels Differentialkalorimetrie in J/g gemessen werden. Ist eine Lagerungstemperatur des Gutes auf einen bestimmten Temperaturbereich festgelegt, so hat die Bewahrung in der Thermoschutzspeicherzelle beziehungsweise ein Transport darin mit demselben Temperaturbereich zu erfolgen.

Damit ergeben sich die beiden Temperaturgrenzwerte beziehungsweise die obere Temperatur und die untere Temperatur des Temperaturbereiches. Insbesondere kann mit der Thermoschutzspeicherzelle gleichzeitig verhindert werden, dass der untere Temperaturbereich unterschritten und der obere Temperaturbereich überschritten wird. Eine aktive Kühlung beziehungsweise Erwärmung durch die Thermoschutzspeicherzelle findet dabei nicht statt.

Die erfindungsgemässe Thermoschutzspeicherzelle besitzt also zwei unabhängige Schutzeinrichtungen, die eine zum Schutz der durch die untere Temperatur definierte Grenze beziehungsweise Temperaturuntergrenze und die andere zum Schutz der durch die obere Temperatur definierte Grenze beziehungsweise Temperaturobergrenze.

Zum Schutz der Temperaturuntergrenze vor der Kälteseite wird bevorzugt möglichst grenznah eine adäquate Menge von erstem Phasenwechselmaterial zur Energieeinspeicherung zur Verfügung gestellt. Fliesst von aussen Kälte beziehungsweise eine Kälteenergie auf die Thermospeicherzelle, so führt die Kälteenergie bei latenter oder konstanter Energieeinlagerung zum Phasenwechsel des beispielsweise flüssigen Phasenwechselmaterials zu einem beispielsweise festen beziehungsweise kristallinen Phasen- beziehungsweise Aggregatszustand.

Zum Schutz der Temperaturobergrenze bei zuströmender Wärme wird bevorzugt möglichst grenznah eine adäquate Menge von zweitem Phasenwechselmaterial zur Energieeinspeicherung zur Verfügung gestellt. Fliesst Wärme beziehungsweise eine Wärmeenergie auf die Thermospeicherzelle, so führt die Wärmeenergie bei latenter oder konstanter Energieeinlagerung zum Phasenwechsel des beispielsweise festen beziehungsweise kristallinen Phasenwechselmaterials zu einem flüssigen Phasen- beziehungsweise Aggregatszustand.

Die vorliegende Erfindung hat gegenüber dem Stand der Technik unter anderem folgende Vorteile:

Der Temperaturbereich kann über die Auswahl geeigneter erster und zweiter Phasenwechselmaterialien effizient auf das Gut angepasst sein. Beispielsweise kann er einem Arzneimitteltemperaturschutzbereich entsprechen, wenn das Gut ein Arzneimittel ist.

Weiter können die beiden verschiedenen in der mindestens einen Thermospeicherzelle enthaltenen Phasenwechselmaterialien punktgenau und ohne Latentwärmespeicherverluste die beiden Temperaturgrenzwerte schützen.

Zudem kann die Thermospeicherzelle ein mehrfaches an Schutzleistungsvermögen respektive Leistungs-/Gewichtsverhältnis besitzen, da die beiden Phasenwechselmaterialien ein verhältnismässig hohes Latentwärmespeichervermögen besitzen können, da keine Kannibalisierung der Thermogesamtleistung stattfindet und da ein Wärmeverlust an der Thermoschutzspeicherzelle verhindert werden kann.

Auch kann das verhältnismässig hohe Schutzleistungsvermögen der Thermoschutzspeicherzelle eine Wandstärke einer zugehörigen Kühltransportbox beziehungsweise Transportbox reduzieren und damit zu einem im Vergleich zu herkömmlichen Transportboxen in der dritten Potenz erhöhtem Boxnutzvolumen führen.

Schliesslich kann eine Gefriergefahr minimiert beziehungsweise eliminiert werden, was beispielsweise wichtig sein kann, wenn die Thermoschutzspeicherzelle in einer Kühltransportbox zum Beispiel an einer Flughafenabfertigung oder am Zoll mehrere Tage in einem Kühlraum liegen bleibt, weil umgekehrt bei der unteren Temperatur und der oberen Temperatur die Thermoschutzspeicherzelle thermisch geladen oder reaktiviert werden kann.

Damit ermöglicht die erfindungsgemässe Thermoschutzspeicherzelle auf einfache und sinnvolle Weise eine effiziente und sichere Wahrung des temperaturempfindlichen Guts im Temperaturbereich insbesondere während dessen Transport.

Vorzugsweise wechselt das erste Phasenwechselmaterial bei etwa der unteren Temperatur zwischen einer festen und einer flüssigen Phase. Analog dazu wechselt das zweite Phasenwechselmaterial bei etwa der oberen Temperatur vorzugsweise zwischen einer festen und einer flüssigen Phase. Solche Phasenwechselmaterialien ermöglichen eine effiziente und präzise Implementierung der Thermoschutzspeicherzelle.

Vorzugsweise betragen die untere Temperatur etwa 2°C und die obere Temperatur etwa 8°C. Eine so definierte Temperaturunter- und -obergrenze definiert einen Temperaturbereich, der in vielen Anwendungen gewünscht ist. Beispielsweise sind Arzneimittel und insbesondere biopharmazeutische Arzneimittel häufig in der Lagerung in diesem Temperaturbereich zu halten. Auch Lebensmittel und insbesondere Frischlebensmittel wie Milchprodukte, Fleich oder Gemüse werden häufig bevorzugt in diesem Temperaturbereich gehalten.

Alternativ dazu betragen vorzugsweise die untere Temperatur etwa 15°C und die obere Temperatur etwa 25°C. Solche Grenztemperaturen ermögliche es, einen Temperaturbereich zu definieren, der üblicherweise vorhandene Zimmertemperaturen umfasst. Ein solcher Zimmertemperaturbereich kann beispielsweise für die Lagerung von vielen Medikamenten beziehungsweise Arzneimitteln gewünscht sein.

Alternativ dazu liegt die obere Temperatur vorzugsweise in einem Bereich von etwa 15°C bis etwa 25°C. Eine obere Temperatur in diesem Bereich kann in vielen Anwendungen als Raumtemperaturbereich gewünscht sein.

Alternativ dazu betragen vorzugsweise die untere Temperatur etwa -25°C und die obere Temperatur etwa -18°C. Solche Grenztemperaturen ermöglichen die Festlegung eines Tiefkühltemperaturbereichs. Ein solcher Temperaturbereich kann in Anwendungen gewünscht sein, in denen Güter für lange Zeit gelagert werden sollen. Beispielsweise kann er für das Tiefkühlen und Lagern von Lebensmitteln eingesetzt werden.

Alternativ dazu betragen vorzugsweise die untere Temperatur etwa -90°C und die obere Temperatur etwa -70°C. Solche Grenztemperaturen ermöglichen die Festlegung eines Temperaturbereichs, wie er in der pharmazeutischen Industrie regelmässig gewünscht ist.

Vorzugsweise umfasst die mindestens eine Füllkammer mindestens oder genau zwei Füllkammern, wobei eine erste der mindestens zwei Füllkammern mit dem ersten Phasenwechselmaterial befüllt ist und eine zweite der mindestens zwei Füllkammern mit dem zweiten Phasenwechselmaterial. Mit einer solchen Thermoschutzspeicherzelle kann unter anderem erreicht werden, dass die Phasenwechselmaterialien unabhängig voneinander ausgewählt werden können. Insbesondere kann mit einer solchen Ausgestaltung verhindert werden, dass die Phasenwechselmaterialien gemischt werden müssen und eventuell miteinander interagieren. Entsprechend können die Phasenwechselmaterialien auf ihren Verwendungszweck hin optimiert ausgewählt werden, ohne dass berücksicht werden muss, ob sie einander beeinträchtigen.

Ein anderer Aspekt der Erfindung betrifft eine Transportbox für den Transport eines temperaturempfindlichen Guts in einem Temperaturbereich von einer unteren Temperatur bis zu einer oberen Temperatur. Die Transportbox umfasst einen Innenraum zum Aufnehmen des temperaturempfindlichen Guts und eine Zellenwand, die den Innenraum umgibt. In der Zellenwand ist mindestens eine Thermoschutzspeicherzelle angeordnet, wie sie oben beschrieben ist.

Mit dem Begriff "Aufnehmen" kann ein Stellen, Setzen, Legen oder sonstiges Anordnen des Guts im Innenraum der Thermoschutzspeicherzelle gemeint sein. Dazu kann der Innenraum zugänglich machbar wie beispielsweise öffenbar sein. Das Gut kann dann in den geöffneten Innenraum gestellt, gesetzt oder gelegt werden und der Innenraum kann wieder geschlossen werden. Der Innenraum kann also vollständig schliessbar sein, sodass das Gut komplett von der Zellenwand umgeben ist.

Thermoschutzspeicherzellen der oben beschriebenen Art können in Transportboxen jeglicher Grösse, von kleinen Patiententransportboxen über Kuriertransportboxen und Palettentransportboxen bis zu Transportboxen in der Grösse von Flugzeugcontainern oder Schiffscontainern eingesetzt werden. Mit solchen Transportboxen können die oben im Zusammenhang mit der Thermoschutzspeicherzelle beschriebenen Effekte und Vorteile effizient implementiert werden. Insbesondere können mit solchen Transportboxen diese Effekte und Vorteile in dem häufigen Anwendungsfall des Transports von Gütern erzielt werden.

Die Thermoschutzspeicherzellen von erfindungsgemässen Transportboxen oder auch ganze Transportboxen können in mannigfaltiger Weise wiederverwertet werden. Beispielsweise können sie nach ihrer Verwendung zum Transport von Arzneimitteln als Kühlboxen beispielsweise für Lebensmittel verwendet werden. Dies kann aus ökologischen und ökonomischen Gründen häufig vorteilhaft und sinnvoll sein.

Vorzugsweise ist die mindestens eine Thermoschutzspeicherzelle in der Transportbox von einer Isolation abgedeckt. Der Begriff "Abdecken" kann sich in diesem Zusammenhang darauf beziehen, dass die Thermoschutzspeicherzelle von aussen zumindest teilweise umgeben ist. Beispielsweise kann die mindestens eine Thermoschutzspeicherzelle so von der Isolation eingepackt sein.

Die Isolation kann ein lockeres Material sein, das beispielsweise anliegend an die Zellenwand aufgeschüttet ist. Oder die Isolation kann aus einem festen Material beispielsweise in Form von Platten oder dergleichen hergestellt sein.

Eine solche Isolation kann die Effizienz der Transportbox verbessern. Insbesondere kann das Übertragen von verhältnismässig schnellen Temperaturschwankungen ausserhalb der Transportbox auf die Thermoschutzspeicherzelle eingedämmt werden.

Vorzugsweise umfasst die Transportbox eine Schutzhülle, welche an einer Innenseite der Zellenwand, die an den Innenraum angrenzt, angeordnet ist. Eine solche Schutzhülle kann ein besonders effizientes, schonendes und geschütztes Aufnehmen des Guts im Temperaturbereich ermöglichen. Beispielsweise kann die Schutzhülle aus Wellpappe in Form einer inneren Box hergestellt sein.

Ein anderer weiterer Aspekt der Erfindung betrifft bevorzugte Verwendungen einer Transportbox der vorstehend beschriebenen Art.

Insbesondere kann die Transportbox erfindungsgemäss für den Transport eines pharmazeutischen Arzneimittels verwendet werden, wobei die untere Temperatur etwa 2°C und die obere Temperatur etwa 8°C, die untere Temperatur etwa 15°C und die obere Temperatur etwa 25°C, die untere Temperatur etwa -25°C und die obere Temperatur etwa -18°C oder die untere Temperatur etwa -90°C und die obere Temperatur etwa -70°C beträgt.

Oder die Transportbox kann erfindungsgemäss für den Transport eines Lebensmittels verwendet werden, wobei die untere Temperatur etwa -25°C und die obere Temperatur etwa -18°C oder die untere Temperatur etwa 2°C und die obere Temperatur etwa 8°C beträgt.

Oder die Transportbox kann erfindungsgemäss für den Transport eines menschlichen oder tierischen Organs verwendet werden, wobei die untere Temperatur und die obere Temperatur auf das menschliche oder tierische Organ angepasst sind.

Die Erfindung wurde zwar anhand ihrer bevorzugten Ausführungsform erläutert, doch können viele weitere Änderungen und Variationen vorgenommen werden, ohne über den Umfang der vorliegenden Erfindung hinauszugehen. Daher ist es vorgesehen, dass die beiliegende Patentsprüche Änderungen und Variationen abdecken, die im tatsächlichen Umfang der Erfindung enthalten sind.

### Kurze Beschreibung der Zeichnungen

Weitere vorteilhafte Ausgestaltungen der Erfindung ergeben sich aus der nachfolgenden Beschreibung von Ausführungsbeispielen mit Hilfe der schematischen Zeichnung. Insbesondere werden im Folgenden die erfindungsgemässe Thermoschutzspeicherzelle und die erfindungsgemäss Transportbox unter Bezugnahme auf die beigefügten Fig. 1 und Fig. 2 anhand von Ausführungsbeispielen detaillierter beschrieben. In den Fig. 3, Fig. 4 und Fig. 5 sind Ausführungsformen von Transportboxen aus dem Stand der Technik gezeigt, wie sie oben beschrieben sind. Es zeigen:
- Fig. 1: ein Ausführungsbeispiel einer erfindungsgemässen Transportbox mit einer erfindungsgemässen Thermoschutzspeicherzelle;
- Fig. 2: eine grafische Darstellung des Verlaufs des Wärmeflusses eines Phasenwechselmaterials der Thermoschutzspeicherzelle von Fig. 1 über steigende Temperaturen gemessen mit Differentialkalorimetrie;
- Fig. 3: ein erstes Ausführungsbeispiel einer Transportbox aus dem Stand der Technik;
- Fig. 4: ein zweites Ausführungsbeispiel einer Transportbox aus dem Stand der Technik; und

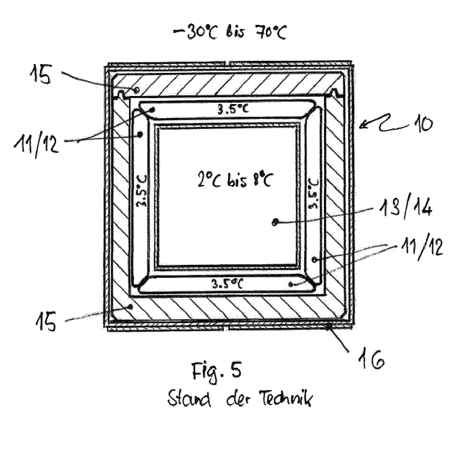

- Fig. 5: ein drittes Ausführungsbeispiel einer Transportbox aus dem Stand der Technik.

### Weg(e) zur Ausführung der Erfindung

Bestimmte Ausdrücke werden in der folgenden Beschreibung aus praktischen Gründen verwendet und sind nicht einschränkend zu verstehen. Die Wörter "rechts", "links", "unten" und "oben" bezeichnen Richtungen in der Zeichnung, auf die Bezug genommen wird. Die Ausdrücke "nach innen", "nach aussen" "unterhalb", "oberhalb", "links", "rechts" oder ähnliche werden zur Beschreibung der Anordnung bezeichneter Teile zueinander, der Bewegung bezeichneter Teile zueinander und der Richtungen hin zum oder weg vom geometrischen Mittelpunkt der Erfindung sowie benannter Teile derselben wie in den Fig. dargestellt verwendet. Diese räumlichen Relativangaben umfassen auch andere Positionen und Ausrichtungen als die in den Fig. dargestellten. Zum Beispiel wenn ein in den Fig. dargestelltes Teil umgedreht wird, sind Elemente oder Merkmale, die als "unterhalb" beschrieben sind, dann "oberhalb". Die Terminologie umfasst die oben ausdrücklich erwähnten Wörter, Ableitungen von denselben und Wörter ähnlicher Bedeutung.

Fig. 1 zeigt eine Kühltransportbox 7 als Ausführungsbeispiel einer erfindungsgemässen Transportbox. Die Kühltransportbox 7 weist einen etwa acht Liter fassenden Innenraum 6 zum Aufnehmen eines temperaturempfindlichen Arzneimittels auf, der von einer Zellenwand 91 umgeben ist. Eine Innenseite der Zellenwand 91 ist mit einer Schutzschicht 8 ausgestattet, die den Innenraum 6 begrenzt. Der Innenraum 6 hat einen quasi quadratischen Querschnitt mit einer ebenen horizontalen Bodenwand, vertikalen Seitenwänden und einer horizontalen Deckenwand. Auf die Bodenwand des Innenraums 6 kann das Arzneimittel gestellt werden kann.

Die Zellenwand 91 ist mit mehreren Thermoschutzspeicherzellen 1 bestückt, die um den Innenraum 6 herum angeordnet sind. Insbesondere grenzt jeweils eine Thermoschutzspeicherzelle 1 an an eine der Boden-, Seiten- oder Deckenwände des Innenraums 6 an. Die Thermoschutzspeicherzellen 1 weisen jeweils einen Zellenkörper 2 auf, in dem zwei Füllkammern 3 angeordnet sind. Die Füllkammern 3 liegen flach nebeneinander, sodass beide an die entsprechende Wand des Innenraums 6 angrenzen. Die beiden Füllkammern 3 jeder Thermoschutzspeicherzelle 1 umfassen eine erste und eine zweite Füllkammer 3. Die erste Füllkammer 3 ist mit einem ersten Phasenwechselmaterial 4 befüllt, das bei etwa 2°C seine Phase wechselt. Die zweite Füllkammer 3 ist mit einem zweiten Phasenwechselmaterial 5 befüllt, das bei etwa 8°C seine Phase wechselt. Insbesondere wechseln das erste und zweite Phasenwechselmaterial 4, 5 ihre Phasen beziehungsweise Aggregatszustände bei 2°C beziehungsweise 8°C zwischen fest und flüssig.

Nach aussen hin ist die Zellenwand 91 von einer Isolation 92 umgeben. Dadurch sind die Thermoschutzspeicherzellen 1 von der Isolation 92 eingepackt und vor kurzfristigen Temperaturschwankungen und vor Einstrahlung geschützt. Die Isolation 92 weist einen unteren Gefässteil und einen Deckelteil auf. Der Deckelteil der Isolation 92 kann abgehoben und so das Innere der Isolation 92 zugänglich gemacht werden. Nach aussen ist die Transportbox 1 von einer Aussenwand 93 abgeschlossen. Die Aussenwand 93 fasst alle anderen Komponenten der Transportbox 1 in seinem Innern. Sie kann von oben her geöffnet werden. Die Aussenwand 93 kann aus Pappe beziehungsweise Wellpappe bestehen.

Über die jeweils ersten und zweiten Füllkammern 3 beziehungsweise die darin enthaltenen Phasenwechselmaterialien 4, 5 kann der Innenraum 6 in einem Temperaturbereich von 2° bis 8° gehalten werden. Die im Innenraum 6 angeordneten Arzneimittel können so während ihres Transports in diesem Temperaturbereich aufbewahrt werden.

Insbesondere kann in einem Fall, in dem Kälte unter 2°C die Isolation 92 durchdringt, das erste Phasenwechselmaterial 4 in den ersten Füllkammern 3 zunehmend von einer flüssigen in eine festen Phase wechseln. Dadurch kann eine verhältnismässig grosse Menge an Kälteenergie aufgenommen werden und der Innenraum 6 bleibt vor einer Kälteeinstrahlung geschützt. Das erste Phasenwechselmaterial 4 wirkt so als Kältesperre.

Analog dazu kann in einem Fall, in dem Wärme über 8°C die Isolation 92 durchdringt, das zweite Phasenwechselmaterial 5 in den zweiten Füllkammern 3 zunehmend von einer festen in eine flüssige Phase wechseln. Dadurch kann eine verhältnismässig grosse Menge an Wärmeenergie aufgenommen werden und der Innenraum 6 bleibt vor einer Wärmeeinstrahlung geschützt. Das zweite Phasenwechselmaterial 5 wirkt so als Wärmesperre.

In der Fig. 2 ist beispielhaft aufgezeigt, wie der Wärmefluss durch das zweite Phasenwechselmaterial 5 der Thermoschutzspeicherzelle 1 verläuft. Daraus ist ersichtlich, dass von -50°C bis +50°C ein über Weite Strecken quasi konstanter Wärmefluss von etwas weniger als 1 mW vorhanden ist. Bei ungefähr -24°C erfolgt ein Ausschlag auf etwa 4 mW. Über die Fläche dieses Ausschlags lassen sich etwa 18 J pro Gramm zweites Phasenwechselmaterial 5 aufnehmen. Ein zweiter bedeutend grösserer Ausschlag ist bei etwa 8°C vorhanden, bei welcher Temperatur das zweites Phasenwechselmaterial 5 seine Phase zwischen flüssig und fest wechselt. Über die Fläche dieses zweiten Ausschlags lassen sich etwa 150 J pro Gramm zweites Phasenwechselmaterial 5 aufnehmen. Mit einer solchen Analyse beziehungsweise wie in Fig. 2 gezeigten Messung lassen sich Phasenwechselmaterialien identifizieren, die genau geforderte Bedingungen erfüllen. Insbesondere ist das in Fig. 2 gezeigte Material als Temperatursperre um die 8°C geeignet.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Um die Erfindung nicht zu verklären, können in gewissen Fällen wohlbekannte Strukturen und Techniken nicht im Detail gezeigt und beschrieben sein. Es versteht sich, dass Fachleute Änderungen und Abwandlungen machen können, ohne den Umfang der folgenden Ansprüche zu verlassen. Insbesondere deckt die vorliegende Erfindung weitere Ausführungsbeispiele mit irgendwelchen Kombinationen von Merkmalen ab, die von den explizit beschriebenen Merkmalskombinationen abweichen können. Beispielsweise kann die Erfindung auch in folgender Form realisiert sein:
- Die ersten und zweiten Phasenwechselmaterialien können auch in eine gemeinsam Füllkammer befüllt sein. Das kann die Konstruktion der Thermoschutzspeicherzellen vereinfachen. Jedoch ist dabei darauf zu achten, dass sich die beiden Phasenwechselmaterialien nicht gegenseitig stören beziehungsweise beeinflussen.
- Bei Kühltransportboxen auf Paletten oder bei Flugzeug und Schiffscontainern kann anstelle des Deckenteils eine Seitenwand geöffnet werden.

Die vorliegende Offenbarung umfasst auch Ausführungsformen mit jeglicher Kombination von Merkmalen, die vorstehend oder nachfolgend zu verschiedenen Ausführungsformen genannt oder gezeigt sind. Sie umfasst ebenfalls einzelne Merkmale in den Figuren, auch wenn sie dort im Zusammenhang mit anderen Merkmalen gezeigt sind und/oder vorstehend oder nachfolgend nicht genannt sind. Auch können die in den Figuren und der Beschreibung beschriebenen Alternativen von Ausführungsformen und einzelne Alternativen deren Merkmale vom Erfindungsgegenstand beziehungsweise von den offenbarten Gegenständen ausgeschlossen sein. Die Offenbarung umfasst Ausführungsformen, die ausschliesslich die in den Ansprüchen beziehungsweise in den Ausführungsbeispielen beschriebenen Merkmale umfasst sowie auch solche, die zusätzliche andere Merkmale umfassen.

Im Weiteren schliesst der Ausdruck "umfassen" und Ableitungen davon andere Elemente oder Schritte nicht aus. Ebenfalls schliesst der unbestimmte Artikel "ein" bzw. "eine" und Ableitungen davon eine Vielzahl nicht aus. Die Funktionen mehrerer in den Ansprüchen aufgeführter Merkmale können durch eine Einheit beziehungsweise einen Schritt erfüllt sein. Die Begriffe "im Wesentlichen", "etwa", "ungefähr" und dergleichen in Verbindung mit einer Eigenschaft beziehungsweise einem Wert definieren insbesondere auch genau die Eigenschaft beziehungsweise genau den Wert. Die Begriffe "etwa" und "ungefähr" im Zusammenhang mit einem gegebenen Zahlenwert oder -bereich kann sich auf einen Wert beziehungsweise Bereich beziehen, der innerhalb 20%, innerhalb 10%, innerhalb 5% oder innerhalb 2% des gegebenen Werts beziehungsweise Bereichs liegt. Alle Bezugszeichen in den Ansprüchen sind nicht als den Umfang der Ansprüche einschränkend zu verstehen.

## Patentansprüche

1. Thermoschutzspeicherzelle (1) für die Wahrung eines Temperaturbereichs von einer unteren Temperatur bis zu einer oberen Temperatur, umfassend:
einen Zellenkörper (2) und
mindestens eine Füllkammer (3), die im Zellenkörper (2) angeordnet ist,
**dadurch gekennzeichnet, dass**
die mindestens eine Füllkammer (3) mit einem ersten Phasenwechselmaterial (4) befüllt ist, welches bei etwa der unteren Temperatur seine Phase wechselt, und
die mindestens eine Füllkammer (3) mit einem zweiten Phasenwechselmaterial (5) befüllt ist, welches bei etwa der oberen Temperatur seine Phase wechselt.

2. Thermoschutzspeicherzelle (1) nach Anspruch 1, bei der das erste Phasenwechselmaterial (4) bei etwa der unteren Temperatur zwischen einer festen und einer flüssigen Phase wechselt.

3. Thermoschutzspeicherzelle (1) nach Anspruch 1 oder 2, bei der das zweite Phasenwechselmaterial (5) bei etwa der oberen Temperatur zwischen einer festen und einer flüssigen Phase wechselt.

4. Thermoschutzspeicherzelle (1) nach einem der vorangehenden Ansprüche, bei der die untere Temperatur etwa 2°C und die obere Temperatur etwa 8°C betragen.

5. Thermoschutzspeicherzelle (1) nach einem der Ansprüche 1 bis 3, bei der die untere Temperatur etwa 15°C und die obere Temperatur etwa 25°C betragen.

6. Thermoschutzspeicherzelle (1) nach einem der Ansprüche 1 bis 3, bei der die untere Temperatur etwa -25°C und die obere Temperatur etwa -18°C betragen.

7. Thermoschutzspeicherzelle (1) nach einem der Ansprüche 1 bis 3, bei der die untere Temperatur etwa -90°C und die obere Temperatur etwa -70°C betragen.

8. Thermoschutzspeicherzelle (1) nach einem der vorangehenden Ansprüche, bei der die mindestens eine Füllkammer (3) einen Verschluss aufweist.

9. Thermoschutzspeicherzelle (1) nach einem der vorangehenden Ansprüche, bei der die mindestens eine Füllkammer (3) mindestens zwei Füllkammern (3) umfasst, wobei eine erste der mindestens zwei Füllkammern (3) mit dem ersten Phasenwechselmaterial (4) befüllt ist und eine zweite der mindestens zwei Füllkammern (3) mit dem zweiten Phasenwechselmaterial (5) befüllt ist.

10. Transportbox (7) für den Transport eines temperaturempfindlichen Guts in einem Temperaturbereich von einer unteren Temperatur bis zu einer oberen Temperatur, umfassend:
einen Innenraum (6) zum Aufnehmen des temperaturempfindlichen Guts, und
eine Zellenwand (91), die den Innenraum (6) umgibt,
**dadurch gekennzeichnet, dass**
mindestens eine Thermoschutzspeicherzelle (1) nach einem der vorangehenden Ansprüche in der Zellenwand (91) angeordnet ist.

11. Transportbox (7) nach Anspruch 10, die eine Isolation (92) umfasst, wobei die Isolation (92) die mindestens eine Thermoschutzspeicherzelle (1) abdeckt.

12. Verwendung einer Transportbox (7) gemäss nach Anspruch 10 oder 11 für den Transport eines pharmazeutischen Arzneimittels, wobei die untere Temperatur etwa 2°C und die obere Temperatur etwa 8°C, die untere Temperatur etwa 15°C und die obere Temperatur etwa 25°C, die untere Temperatur etwa -25°C und die obere Temperatur etwa -18°C oder die untere Temperatur etwa -90°C und die obere Temperatur etwa -70°C beträgt.

13. Verwendung einer Transportbox (7) gemäss Anspruch 10 oder 11 für den Transport eines Lebensmittels, wobei die untere Temperatur etwa -25°C und die obere Temperatur etwa -18°C oder die untere Temperatur etwa 2°C und die obere Temperatur etwa 8°C beträgt.

14. Verwendung einer Transportbox (7) gemäss Anspruch 10 oder 11 für den Transport eines menschlichen oder tierischen Organs, wobei die untere Temperatur und die obere Temperatur auf das menschliche oder tierische Organ angepasst sind.
